# EUROPEAN PATENT APPLICATION

(11) **EP 2 256 448 A2**
(43) Date of publication of application: **01.12.2010**
(21) Application number: 09175340.0
(22) Date of filing: 07.11.2009
(51) Int. Cl.: F28D 1/03, F28F 13/08, F28F 9/02

(54) **Flow adjustment device in water outlet line of radiators**

(30) Priority: 20.05.2009 TR 200903892 U
(71) Applicant: Elba Basinçli Döküm Sanayi Anonim Sirketi, 45030 Manisa (TR)
(72) Inventor: Eroglu, M. Okan, 45030 Manisa (TR); Elçe, E. Serdar, 45030 Manisa (TR)
(74) Representative: Iskender, Ibrahim

(57) **Abstract**

The invention relates to radiators containing radiator front surface (13') and rear surface (13) and water passage spaces (14) formed as a result of joining of the surfaces (13, 13') and providing pass of hot water and it is characterized in that in order to ensure more efficient use of hot water channelized into radiator (10) through water inlet space (11) and more penetration of the energy onto surfaces (13, 13'), it consists of at least one deformed surface (15) formed on any one of the outer elevations (17) of the said radiator (10) and/or water passage spaces (14).

## Description

### The Related Art

The invention relates to radiators wherein liquid is circulated and transmitting the heat obtained from burning of combi boiler and a similar fuel-oil burning used in heating of locations of home and any buildings.

The said invention consists of at least one deformed surface provided on any one of the outer elevations and/or water passing spaces of the said radiators in order to provide use of hot water channelized into radiator by means of water inlet space and more penetration of the energy to the surfaces.

### Background of the Related Art

General connection in radiators is at panel, while the outlet is at the lower part of the same side. In long radiators, the connection way is over the panel while the outlet is under the lower part of other side (cross-connection). As the panel sheets used for manufacturing panel radiators are symmetric, all water channels have equivalent area. In cases where inlet and outlet are made from the same side, the water inletting into the panel radiator leaves the product from the easiest way it finds naturally. The hot water entering the radiator leaves the panel from the water channel on the entering side quickly and the energy in the water is not transmitted to the panel and consequently the product efficiency decreases.

When searching patents related to radiators, some patent applications were seen in Turkish Patent Institute records. One of them is the utility model application no. TR2008/04007U filed on 03.06.2008. The abstract part of the invention reads as follows: the radiator offered according to existing development relates to a radiator which is modified n a manner to provide less occupation of space by unit thermal output quantity and thus length of fin is shorter in the fins located along channels in conventional radiators wherein the hot water transmits its heat along followed channel and settles down at the bottom of the radiator and has difficulty to flow out. The design provided in this way optimizes calory output per unit area but ia product occupying less area.

Another application is the one filed on 16.02.1999 and numbered TR1999/00323U. The abstract part of the application states that in order to increase the thermal efficiency of radiators and decrease the radiator costs per unit thermal transfer, fluid is directed into heater fluid channels and the way is increased and flow directing means are located to increase the sped and decrease the hydraulic diameter. Thus the convection heat transfer coefficient on heater fluid side is increased and the temperature decrease between fluid and surface will decrease and the temperature of the radiator surfaces in contact with air will increase as the fluid temperature is constant The additional costs to be incurred for directing the flowing is considerably low when the increase in heat transfer and cost of radiator are taken into account.

### Description of the Invention

The purpose of the invention is to provide an embodiment offering a different solution and technique in the field and containing a different structure in comparison to the radiators used in the related art.

One purpose of the invention is to decrease the output speed of fluid or late output thereof by help of form change provided in the fluid output area of the radiator.

Another purpose of the invention is to transfer the water heat (energy) to the radiator sheet by help of late outlet of the water from output area of the radiator. Thus the heat is benefited from and the efficiency is increased.

A further purpose of the invention is to provide increase the heat in the environment and save energy by help of late outlet of the fluid from the radiator.

In order to achieve the above mentioned purposes, the invention consists of at least one deformed surface provided on any one of the outer elevations and/or water passing spaces of the said radiators in order to provide use of hot water channelized into radiator by means of water inlet space and more penetration of the energy to the surfaces.

In order to achieve the above mentioned purposes, the invention consists of at least one low flow rate water outlet space containing a smaller passing space or volume than the said normal flow rate water passage space as a result of forming the said deformed surface.

### Figures to describe the Invention

In order to make the embodiment and additional members being subject of the present invention as well as the advantages clearer for better understanding, it should be assessed with reference to the fallowing described figures.
Figure -1 shows an overall perspective view of the radiator being subject of the invention.
Figure -2 shows particularly a perspective view of a plan section close to the deformed area of the radiator being subject of the invention.
Figure -3 shows particularly a two dimension view of a plan section close to the deformed area of the radiator being subject of the invention.

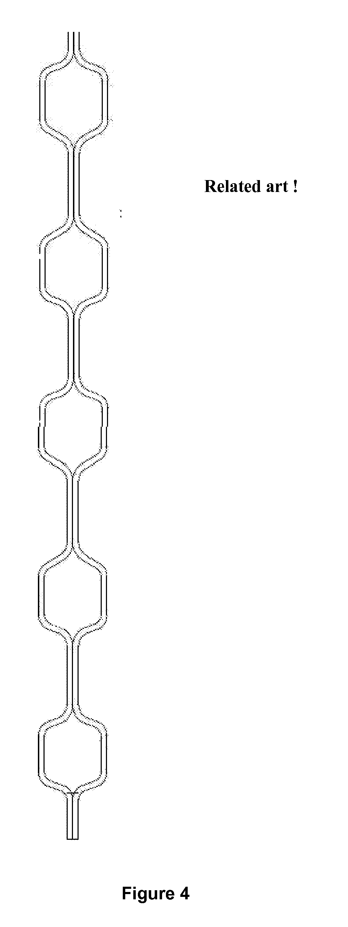

Figure 4 is the side two dimension view of the radiator embodiment of the related art.

### Part Numbers

10. Radiator
11- Water inlet space
12- Water outlet space
13- Radiator rear surface
13'- Radiator front surface
14. Normal flow rate water passage spaces
15. Deformed surface
16- Low flow rate water outlet space
17. Outer elevations
18- Inner surfaces

### Detailed Description of the Invention

In this detailed description, the preferred embodiments of the radiator (10) being subject of the invention have been described in a manner not forming any restrictive effect and only for purpose of better understanding of the matter.

In terms of factors related to the related art, the invention contains radiator front and rear surfaces (13', 13) having outer elevations (17) thereon, water outlet spaces (12) formed on the said radiator rear surface (13) and normal flow rate water passage spaces (14).

In terms of inventive steps, the said invention consists of at least one deformed surface (15) provided on any one of the outer elevations (17) and/or water passage spaces (14) of the said radiators (10) in order to provide more efficient use of hot water channelized into radiator (10) by means of water inlet space (11) and more penetration of the energy to the surfaces (13, 13').

As a result of forming the said deformed surface (15) being subject of the invention in an area close to water inlet space (12) provides cutting the speed of water output speed or late outlet. In addition, efficiency is increased and energy saving is provided by means of penetration of the heat (energy) to radiator sheet and benefitting from the heat.

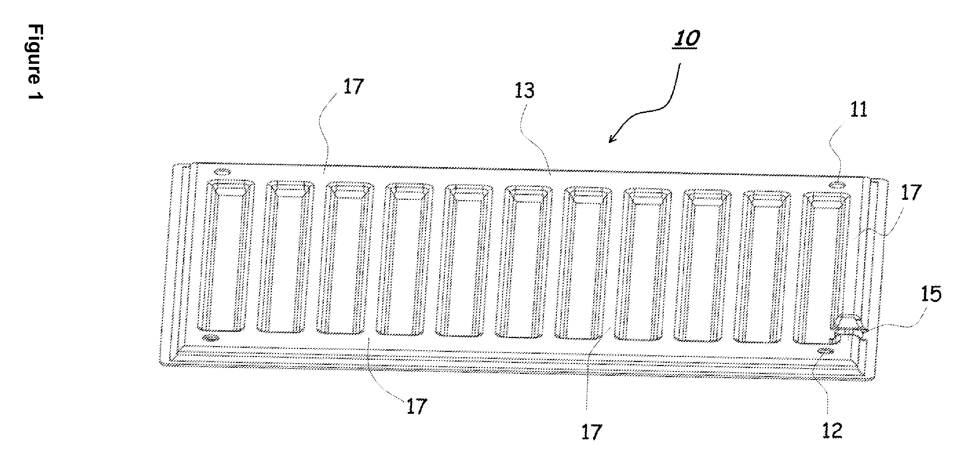

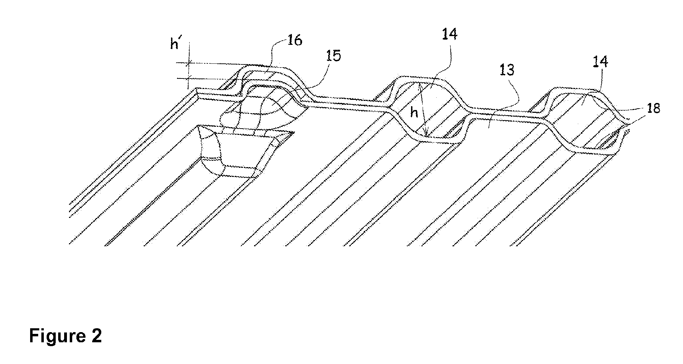

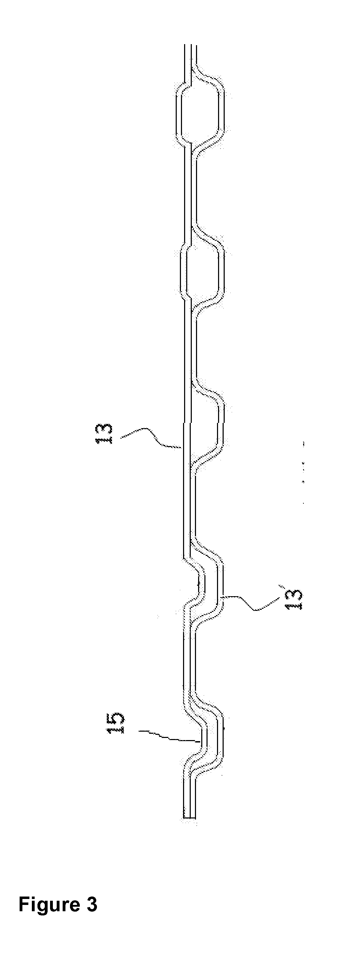

Figure 1 shows view of lowered surface or in other words deformed surface (15) in an area close to preferably water outlet space (12) in any one of the outer elevations of the radiator (10).

Figure -2 shows particularly a perspective view of a plan section close to the deformed area of the radiator being subject of the invention. Deformed surface (15) provided on any one of the front or rear surfaces (13, 13') of the radiator (10) provides lower flow rate water outlet space (16) in comparison to normal flow rate water passage space (14). Lower flow rate water outlet space (16) (h') is lower than the normal flow rate water passage space (14) (h). In other words, h'< h, which means that the inner surfaces (18) of the front surface (13') and rear surface (13) of the radiator are made closer in a manner less than h height and in an area near water outlet space (12).

The protection area of this application has been specified under claims and cannot be limited to the descriptions only given as sampling above. It is clear that any innovation can be provided by a person skilled in the related art by use of the similar embodiments and/or can also apply this embodiment in other areas for similar purposes used in the related art. Therefore, such embodiments will be lack of inventive step criteria and particularly exceeding the related art.

## Claims

1. The invention relates to radiators (10) containing radiator front surface (13') and rear surface (13) and water passage spaces (14) formed as a result of joining of the surfaces (13, 13') and providing pass of hot water and it is ***characterized in that*** in order to ensure more efficient use of hot water channelized into radiator (10) through water inlet space (11) and more penetration of the energy onto surfaces (13, 13'), it consists of at least one deformed surface (15) formed on any one of the outer elevations (17) of the said radiator (10) and/or water passage spaces (14) and formed as result of approaching inner surfaces (18) to each other.

2. A radiator according to claim 1 and it is ***characterized in that*** it consists of at least one low flow rate water outlet space (16) containing a smaller passing space or volume than the said normal flow rate water passage space (14) as a result of forming the said deformed surface (15).

3. A radiator according to claims 1 and 2 and it is ***characterized in that*** it consists at least one deformed surface (15) formed on the rear surface (13) of the said radiator.

4. The invention relates to radiators (10) containing radiator front surface (13') ad rear surface (13) and water passage spaces (14) formed as a result of combining these surfaces (13, 13') and providing passage of hot water, and it is **characterized in that**
- the radiator (10) forms a deformed surface (15) in an area close to water outlet space (12)
- that it contains a lower flow rate water outlet space (16) having a smaller height (h') than the height (h) of the normal flow rate water passage (14).

5. The invention relates to radiators containing radiator front surface (13') ad rear surface (13) and water passage spaces (14) formed as a result of combining these surfaces (13, 13') and providing passage of hot water, and it is ***characterized in that*** the inner surfaces of the front surface (13') and rear surface (13) of the said radiator are made closer in a manner less than h height and in an area near water outlet space (12).
